(19) Europäisches Patentamt / European Patent Office / Office européen des brevets

(11) **EP 2 757 626 B1**

(12) **EUROPEAN PATENT SPECIFICATION**

(45) Date of publication and mention of the grant of the patent:
**14.09.2016 Bulletin 2016/37**

(51) Int Cl.:
*H01M 10/0569* (2010.01)   *H01M 10/0567* (2010.01)
*H01M 10/052* (2010.01)   *H01M 10/0568* (2010.01)
*H01M 4/38* (2006.01)   *H01M 4/485* (2010.01)
*H01M 4/525* (2010.01)

(21) Application number: **13177720.3**

(22) Date of filing: **24.07.2013**

(54) **Lithium battery**

Lithiumbatterie

Batterie au lithium

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.01.2013 US 201361753400 P**
**14.03.2013 US 201313830446**

(43) Date of publication of application:
**23.07.2014 Bulletin 2014/30**

(73) Proprietor: **Samsung SDI Co., Ltd.**
**Gyeonggi-do 449-577 (KR)**

(72) Inventors:
• **Kim, Myung-Hoon**
**YONGIN-SI (KR)**
• **Han, Man-Seok**
**YONGIN-SI (KR)**
• **Kim, Seung-Wan**
**YONGIN-SI (KR)**
• **Won, Jung-Yeon**
**YONGIN-SI (KR)**
• **Yoo, Ha-Na**
**YONGIN-SI (KR)**

(74) Representative: **Gulde & Partner**
**Patent- und Rechtsanwaltskanzlei mbB**
**Wallstraße 58/59**
**10179 Berlin (DE)**

(56) References cited:
**EP-A1- 0 807 986     EP-A1- 1 039 570**
**EP-A1- 2 312 684     EP-A1- 2 495 797**
**WO-A2-2007/030297   JP-A- H0 837 024**
**JP-A- H07 249 432    US-A1- 2004 038 133**
**US-A1- 2009 325 076  US-A1- 2010 124 708**

• **NAKAJIMA T ET AL: "Effect of addition of fluoroethers to organic solvents for lithium ion secondary batteries", JOURNAL OF FLUORINE CHEMISTRY, ELSEVIER, NL, vol. 111, no. 2, 28 October 2001 (2001-10-28), pages 167-174, XP004308458, ISSN: 0022-1139, DOI: 10.1016/S0022-1139(01)00449-3**

**Description**

The present invention relates to a lithium battery.

[Background]

Lithium secondary batteries are used in portable electronic devices for mobile communication, such as personal digital assistants (PDAs), mobile phones, or notebook computers, electric bicycles or electric vehicles, and have twice greater discharge voltage than typical batteries, and thus, have high energy density.

Lithium secondary batteries produce electric energy due to oxidation and reduction reactions occurring when lithium ions are intercalated to or deintercalated from a positive electrode and a negative electrode, each including an active material that enables the intercalation and deintercalation of lithium ions, with an organic electrolyte or a polymer electrolyte filled therebetween.

For use as a positive active material of a lithium secondary battery, for example, an oxide that consists of lithium and a transition metal and has a structure enabling intercalation of lithium ions may be used. Examples of such an oxide are lithium cobalt oxide ($LiCoO_2$), lithium nickel oxide ($LiNiO_2$), and lithium nickel cobalt manganese oxide ($Li[NiCoMn]O_2$, $Li[Ni_{1-x-y}Co_xM_y]O_2$).

For use as a negative active material, a carbonaceous material, such as an artificial and natural graphite or hard carbon, and a non-carbonaceous material, such as Si, which enable intercalation and deintercalation of lithium, may be used.

The requirement of high-capacity battery results in development of various electrode systems. As a way to achieve high capacity, for example, overlithiated lithium transition metal oxide having a layered structure is used in a positive electrode, and a silicon-based negative active material is used in a negative electrode, and such an electrode system requires excellent electrolytic solutions with excellent high voltage characteristics due to its operation at high voltage.

Lithium batteries and corresponding electrolytes comprising fluoride-based ether are known in the art. Exemplary embodiments thereof are described in WO-A-2007/030 297, EP-A-0 807 986, J. Fluorine Chem. 111, 167 (2001), JP-A-07/249 432, JP-A-08/037 024, EP-A-2 495 797, US-A-2010/124 708, EP-A-1 039 570, US-A-2004/038 133, US-A-2009/325 076, EP-A-2 312 684, US-A-2011/151 336, US-A-2006/051 673, and US-A-66 52 605.

Most non-aqueous electrolytic solution solvents used in conventional lithium secondary batteries have a low withstanding voltage property, and when an electrolytic solution using solvents with low withstanding voltage property is used in a lithium secondary battery, during repeated cycles of charging and discharging, the solvents decompose to generate gas, and thus, inner pressure of a battery increases or a product may cause a polymerization reaction or may attach to the surface of the battery.

Accordingly, there is a need to develop an electrolytic solution that is suitable for a high-capacity electrode system at high voltages.

[Detailed Description of the Invention]

The present invention is directed to a lithium battery as defined in claim 1. The lithium battery includes an electrolyte providing oxidation stability at high voltages and thereby increases a capacity retention ratio, charging and discharging characteristics, and a cycle lifespan of said lithium battery.

The electrolyte comprises a lithium salt and a non-aqueous electrolytic solution, wherein the non-aqueous electrolytic solution comprises fluoride-based ether in an amount of at least 3 vol% based on the total volume of the non-aqueous electrolytic solution. Preferably, the fluoride-based ether in the non-aqueous electrolytic solution is present in an amount of at least 10 vol% based on the total volume of the non-aqueous electrolytic solution. More preferably, the amount of the fluoride-based ether in the non-aqueous electrolytic solution is in the range of 10 to 70 vol% based on the total volume of the non-aqueous electrolytic solution.

In the electrolyte the fluoride-based ether may be present as a single type of compound or may comprises a combination of more than one type of fluoride-based ether compounds.

Preferably, the fluoride-based ether of the electrolyte comprises at least one compound represented by Formula 4, Formula 5 or Formula 6; with

Rf1-O-Rf2           [Formula 4]

wherein Rf1 and Rf2 are each independently a linear or branched C1 to C12 fluoroalkyl group having at least one hydrogen atoms substituted with a fluoro group;

Rf1-O-R                 [Formula 5]

wherein Rf1 is a linear or branched C1 to C12 fluoroalkyl group having at least one hydrogen atoms substituted with a fluoro group, and R is a linear or branched C1 to C12 alkyl group;

Rf1-O-(R'-O)$_n$-Rf2                 [Formula 6]

wherein Rf1 and Rf2 are each independently a linear or branched C1 to C12 fluoroalkyl group having at least one hydrogen atoms substituted with a fluoro group, and R' is a linear or branched C1 to C5 alkylene group, and n is an integer of 1 to 5.

In Formulae 4, 5, and/or 6, Rf1 or Rf2 is preferably a fluoroalkyl group selected from $HCF_2$-, $CF_3$-, $HCF_2CF_2$-, $CH_3CF_2$-, $CF_3CH_2$-, $CF_3CF_2$-, $(CF_3)_2CH$-, $HCF_2CF_2CH_2$-, $CF_3CH_2CH_2$-, $HCF_2CF_2CF_2CH_2$-, $HCF_2CF_2CF_2CF_2CH_2$-, $CF_3CF_2CH_2$-, $CF_3CFHCF_2CH_2$-, $HCF_2CF(CF_3)CH_2$-, or $CF_3CF_2CH_2CH_2$-.

In Formula 5, R is preferably an alkyl group selected from $-CH_3$, $-C_2H_5$, $-C_3H_7$, or $-CH(CH_3)CH_3$.

In Formula 6, R' is preferably an alkylene group selected from $-CH_2$-, $-CH_2CH_2$-, or $-CH_2CH_2CH_2$-.

The fluoride-based ether in the electrolyte of the invention may comprise $HCF_2CF_2CH_2OCF_2CF_2H$, $HCF_2CF_2CH_2OCF_2CH_3$, $CF_3CF_2CH_2OCF_2CF_2H$, $CF_3CF_2CH_2OCF_2H$, $HCF_2CF_2OCH_2CF_3$, $HCF_2CF_2CH_2OCF_2CFHCF_3$, $CF_3CF_2CH_2OCF_2CFHCF_3$, $HCF_2CF_2CH_2OCH_2CFHCF_3$, $CF_3CF_2CH_2OCH_2CFHCF_3$, and/or $HCF_2CF_2CH_2OCH_3$. Preferably, the fluoride-based ether of the electrolyte of the invention comprises $HCF_2CF_2CH_2OCF_2CF_2H$, $HCF_2CF_2CH_2OCF_2CH_3$, $CF_3CF_2CH_2OCF_2H$, $HCF_2CF_2OCH_2CF_3$, and $HCF_2CF_2CH_2OCH_3$.

In the electrolyte, the non-aqueous electrolytic solution further may comprise a carbonate-based compound, an ester-based compound, an ether-based compound, a ketone-based compound, an alcohol-based compound, an aprotic solvent, or a combination thereof. Preferably, the carbonate-based compound comprises a chain carbonate compound, a cyclic carbonate compound, a fluoro carbonate compound, or a combination thereof.

In a preferred embodiment, the non-aqueous electrolytic solution of the electrolyte may comprise or consist of:

>     10 to 70 vol% fluoride-based ether;
>     10 to 30 vol% fluoro carbonate compound, preferably 20 to 30 vol%; and
>     0 to 80 vol% chain carbonate compound, preferably 5 to 75 vol%.

The fluoride-based ether may be selected from $HCF_2CF_2CH_2OCF_2CF_2H$, $HCF_2CF_2CH_2OCF_2CH_3$, $CF_3CF_2CH_2OCF_2CF_2H$, $CF_3CF_2CH_2OCF_2H$, $HCF_2CF_2OCH_2CF_3$, $HCF_2CF_2CH_2OCF_2CFHCF_3$, $CF_3CF_2CH_2OCF_2CFHCF_3$, $HCF_2CF_2CH_2OCH_2CFHCF_3$, $CF_3CF_2CH_2OCH_2CFHCF_3$, and/or $HCF_2CF_2CH_2OCH_3$. Preferably, the fluoride-based ether compound is $HCF_2CF_2CH_2OCF_2CF_2H$ (2,2,3,3-tetrafluoropropyl-1,1-2,2-tetrafluorethyl ether).

The fluoro carbonate compound may be selected from fluoroethylene carbonate (FEC), 4,5-difluoroethylenecarbonate, 4,4-difluoroethylenecarbonate, 4,4,5-trifluoroethylenecarbonate, 4,4,5,5-tetrafluoroethylenecarbonate, 4-fluoro-5-methylethylenecarbonate, 4-fluoro-4-methylethylenecarbonate, 4,5-difluoro-4-methylethylenecarbonate, 4,4,5-trifluoro-5-methylethylenecarbonate, and/or trifluoromethylethylenecarbonate. Preferably, the fluoro carbonate compound is fluoroethylene carbonate (FEC).

The chain carbonate compound may be selected from diethyl carbonate (DEC), dimethyl carbonate (DMC), dipropyl carbonate (DPC), methylpropyl carbonate (MPC), ethylpropylcarbonate (EPC), methylethyl carbonate (MEC). Preferably, the chain carbonate compound is dimethyl carbonate (DMC).

In a particularly preferred embodiment, the non-aqueous electrolytic solution of the electrolyte may comprise or consist of:

>     10 to 70 vol% $HCF_2CF_2CH_2OCF_2CF_2H$
>     (2,2,3,3-tetrafluoropropyl-1,1-2,2-tetrafluorethyl ether);
>     10 to 30 vol% fluoroethylene carbonate (FEC), preferably 20 to 30 vol% fluoroethylene carbonate (FEC); and
>     0 to 80 vol% dimethyl carbonate (DMC), preferably 5 to 75 vol% dimethyl carbonate (DMC).

The electrolyte comprises a lithium salt. Said lithium salt may be LiCl, LiBr, LiI, $LiClO_4$, $LiB_{10}Cl_{10}$, $LiPF_6$, $CF_3SO_3Li$, $CH_3SO_3Li$, $C_4F_3SO_3Li$, $(CF_3SO_2)_2NLi$, $LiN(C_xF_{2x+1}SO_2)(C_yF_{2+y}SO_2$, wherein x and y are natural numbers, $CF_3CO_2Li$, $LiAsF_6$, $LiSbF_6$, $LiAlCl_4$, $LiAlF_4$, lithiumchloroborate, low aliphatic lithium carbonate, 4 phenyl lithium borate, lithium imide, and/or a combination thereof. The lithium salt may be present in a final concentration of 0.1 M to 2.0M.

The electrolyte further comprises an additive to form a stabilized solid electrolyte interface (SEI) on the surface of an electrode of the lithium battery. The additive is tris(trimethylsilyl) phosphate (TMSPa). The additive is preferably present in an amount of 0.01 to 10 wt% based on the total weight of the non-aqueous electrolytic solution to form a stable SEI film.

The lithium battery of the present invention comprises:

a positive electrode including an over-lithiated lithium transition metal oxide with a layered structure;
a negative electrode including a silicon-based negative active material; and
an electrolyte as defined above, which is interposed between the positive electrode and the negative electrode.

The overlithiated lithium transition metal oxide of the positive electrode preferably includes a compound represented by Formula 1 below:

$$xLi_2MO_3\text{-}(1\text{-}x)LiM'O_2 \qquad \text{[Formula 1]}$$

wherein 0<x<1,
M is at least one metal selected from Period 4 transition metals and Period 5 transition metals, having a mean oxidation number of +4, and
M' is at least one metal selected from Period 4 transition metals and Period 5 transition metals, having a mean oxidation number of +3.

The silicon-based negative active material of the negative electrode preferably includes a material selected from the group consisting of Si, $SiO_x (0<x<2)$, Si-Z alloy, wherein Z is alkali metal, alkali earth metal, a Group 11 element, a Group 12 element, a Group 13 element, a Group 14 element, a Group 15 element, a Group 16 element, a transition metal, a rare earth element, or a combination thereof, and is not Si, and a combination thereof.

According to one or more embodiments of the present invention, a lithium battery includes: a positive electrode including an overlithiated lithium transition metal oxide with a layered structure; a negative electrode including a silicon-based negative active material; and an electrolyte that is interposed between the positive electrode and the negative electrode and includes a fluoride-based ether solvent in an amount of 3 vol% or more based on a total volume of a non-aqueous electrolytic solution.

A lithium battery according to an embodiment of the present invention includes an electrolyte of the invention which provides oxidation stability at high voltages to increase a capacity retention ratio, charging and discharging characteristics, and a cycle lifespan.

[Brief Description of the Drawings]

FIG. 1 is a schematic view of a lithium battery according to an embodiment of the present invention.
FIG. 2 shows measurements of a capacitance retention ratio of lithium batteries manufactured according to Examples 1-5 and Comparative Example 1.
FIG. 3 shows measurements of a capacitance retention ratio of lithium batteries manufactured according to Example 3, Example 7, and Comparative Example 1

[Detailed Description of the Invention]

Hereinafter, embodiments of the present invention are described in detail.
A lithium battery according to an embodiment of the present invention includes
a cathode including an overlithiated lithium transition metal oxide having a layered structure;
a negative electrode including a silicon-based negative active material; and
an electrolyte that is interposed between the cathode and the negative electrode and that includes a fluoride-based ether solvent in an amount of 3 vol% or more based on a total volume of a non-aqueous electrolytic solution.
According to an embodiment of the present invention, the overlithiated lithium transition metal oxide may include a compound represented by Formula 1 below.

$$\text{[Formula 1]} \qquad xLi_2MO_3\text{-}(1\text{-}x)LiM'O_2$$

wherein 0<x<1,
M is at least one metal selected from Period 4 transition metals and Period 5 transition metals, having a mean oxidation number of +4, and

M' is at least one metal selected from Period 4 transition metals and Period 5 transition metals, having a mean oxidation number of +3.

Herein, x is set based on a mole.

The overlithiated lithium transition metal oxide may contain an excess amount of Li in the transition metal layer of $LiM'O_2$, and the excess amount of Li is included in the form of $Li_2MO_3$, which has high capacity and stability at high voltage, inside the layered structure of $LiM'O_2$, and accordingly, high capacity and structural stability of a composite positive active material may be obtained.

The lithium transition metal oxide may be a composite having a layered structure, or a solid solution. In some cases, the lithium transition metal oxide may exist in a combination of the composite and the solid solution.

Regarding Formula 1, M may be for example, at least one metal selected from Mn, Ti, Zr, Sn, and Mo, M' may be, for example, at least one metal selected from Ni, Co, Mn, Fe, Al, Mg, Zn, Cu, Cr, V, and Nb.

For example, the lithium transition metal oxide may include a compound represented by Formula 2 below.

$$[\text{Formula 2}] \qquad xLi_2MnO_3\text{-}(1\text{-}x)LiNi_aCO_bMn_cO_2$$

wherein

$0<x<1, 0<a<1, 0<b<1, 0<c<1,$ and $a+b+c=1$.

For example, the lithium transition metal oxide may include a compound represented by Formula 3 below.

$$[\text{Formula 3}] \qquad xLi_2MO_3\text{-}yLiM'O_2\text{-}zLi_{1+d}M''_{2\text{-}d}O_4$$

wherein $x+y+z=1$; $0<x<1, 0<y<1, 0<z<1,$ and $O \leq d \leq 0.33,$

M is at least one metal selected from Period 4 transition metals and Period 5 transition metals, having a mean oxidation number of +4, and

M' is at least one metal selected from Period 4 transition metals and Period 5 transition metals, having a mean oxidation number of +3.

M" is at least one metal selected from Period 4 transition metals and Period 5 transition metals, having a combination mean oxidation numbers of +3 and +4.

Regarding Formula 3, M may be, for example, at least one metal selected from Mn, Ti, Zr, Sn, and Mo, M' may be, for example, at least one metal selected from Ni, Co, Mn, Fe, Al, Mg, Zn, Cu, Cr, V, and Nb, and M" may be, for example, at least one metal selected from Ni, Co, Mn, Fe, Al, Mg, Zn, Cu, Cr, V, and Nb.

The positive electrode may instead include, as the overlithiated lithium transition metal oxide, in addition to the compounds described above, for example, a compound represented by Formula 4 or Formula 5 below:

$$[\text{Formula 4}] \qquad Li[Li_xMe_y]O_{2+d}$$

wherein $x+y=1, 0<x<1,$ and $0 \leq d \leq 0.1,$ and Me is at least one metal selected from the group consisting of Mn, V, Cr, Fe, Co, Ni, Zr, Re, Al, B, Ge, Ru, Sn, Ti, Nb, Mo, and Pt.

$$[\text{Formula 5}] \qquad Li[Li_xNi_aCo_bMn_c]O_{2+d}$$

wherein $x+a+b+c=1$; $0<x<1, 0<a<1, 0<b<1, 0<c<1,$ and $0 \leq d \leq 0.1$.

The lithium transition metal oxide may have a nanoparticle shape with a dimension of at least one region thereof being less than about 500 nm, for example, less than about 200 nm, less than about 100 nm, less than about 50 nm, or less than about 20 nm. The nanoparticle shape is suitable for high-rate discharging characteristics due to its contribution to an increase in an assembly density of a positive electrode plate. In addition, due to a decreased specific surface area, a reactivity thereof with an electrolytic solution decreases and thus, cycle characteristics may increase.

The lithium transition metal oxide may form a primary particle, and when primary particles agglomerate or are combined with each other, or when primary particles are combined with other active materials, secondary particles may be formed.

The negative electrode may include a silicon-based negative active material.

The term "silicon-based" used herein refers to an inclusion of at least about 50 wt% of silicon (Si), for example, an inclusion of at least about 60 wt%, 70 wt%, 80 wt%, or 90 wt% Si, or 100 wt% of Si.

The silicon-based negative active material may be any one of various materials that provide high capacity and are typically used in the art. The silicon-based negative active material may include, for example, a material selected from the group consisting of Si, $SiO_x$(0<x<2), Si-Z alloy (wherein Z is alkali metal, alkali earth metal, a Group 11 element, a Group 12 element, a Group 13 element, a Group 14 element, a Group 15 element, a Group 16 element, a transition metal, a rare earth element, or a combination thereof, and is not Si), and a combination thereof. The element Z may be selected from Mg, Ca, Sr, Ba, Ra, Sc, Y, La, Ti, Zr, Hf, V, Nb, Ta, Cr, Mo, W, Tc, Re, Fe, Ru, Os, Co, Rh, Ir, Ni, Pd, Pt, Cu, Ag, Au, Zn, Cd, B, Ge, P, As, Sb, Bi, S, Se, Te, Po, and a combination thereof. In addition, the silicon-based negative active material, such as Si, $SiO_x$, or Si-Z alloy, may be substantially crystalline (including mono-crystalline and poly-crystalline), non-crystalline, or a combination thereof.

The silicon-based negative active material may have a nano-structure having a dimension of at least one region thereof being less than about 500 nm, for example, less than about 200 nm, less than about 100 nm, less than about 50 nm, or less than about 20 nm. Examples of the nano-structure are a nanoparticle, nanopowder, nanowire, nanorod, nanofiber, nanocrystal, nanodot, and nanoribbon.

Such silicon-based negative active materials may be used alone, or in combination of two or more different kinds thereof.

An electrolyte is interposed between the positive electrode and the negative electrode.

The electrolyte is a lithium salt-containing non-aqueous based electrolyte including a non-aqueous electrolytic solution and a lithium salt, and like the positive electrode and the negative electrode, to secure a withstanding voltage property and an oxidation-resistance stability in a high-capacity electrode system, the electrolyte may include a fluoride-based ether solvent in an amount of 3 to 60 vol% based on a total volume of the non-aqueous electrolytic solution.

An electrolytic solution including a typical carbonate-based solvent having a cyclic group or an alkyl group is unstable because it easily decomposes by oxidation at high voltage. However, the electrolyte including the fluoride-based ether solvent with high oxidation-resistance property stability at high voltage may be suitable for a high-capacity electrode system that operates at high voltages. Accordingly, due to the oxidation-resistance property stability at high voltage, the electrolyte may contribute to an increase in a capacity retention ratio of a lithium battery, and may increase charging and discharging characteristics, thereby extending a cycle lifespan.

The fluoride-based ether solvent may include, for example, at least one of compounds represented by Formulae 4 to 6 below.

[Formula 4]        Rf1-O-Rf2

wherein Rf1 and Rf2 are each independently a linear or branched C1 to C12 fluoroalkyl group having at least one hydrogen atoms substituted with a fluoro group.

[Formula 5]        Rf1-O-R

wherein Rf1 is a linear or branched C1 to C12 fluoroalkyl group having at least one hydrogen atoms substituted with a fluoro group, and R is a linear or branched C1 to C12 alkyl group.

[Formula 6]        Rf1-O-(R'-O)$_n$-Rf2

wherein Rf1 and Rf2 are each independently a linear or branched C1 to C12 fluoroalkyl group having at least one hydrogen atoms substituted with a fluoro group, and R' is a linear or branched C1 to C5 alkylene group, and n is an integer of 1 to 5.

Rf1 or Rf2 may be, for example, a fluoroalkyl group, such as $HCF_2$-, $CF_3$-, $HCF_2CF_2$-, $CH_3CF_2$-, $CF_3CH_2$-, $CF_3CF_2$-, $(CF_3)_2CH$-, $HCF_2CF_2CH_2$-, $CF_3CH_2CH_2$-, $HCF_2CF_2CF_2CH_2$-, $HCF_2CF_2CF_2CF_2CH_2$-, $CF_3CF_2CH_2$-, $CF_3CFHCF_2CH_2$-, $HCF_2CF(CF_3)CH_2$-, or $CF_3CF_2CH_2CH_2$-.

R may be, for example, an alkyl group, such as $-CH_3$, $-C_2H_5$, $-C_3H_7$, or $-CH(CH_3)CH_3$.

R' may be, for example, an alkylene group, such as $-CH_2$-, $-CH_2CH_2$-, or $-CH_2CH_2CH_2$-.

Detailed examples of the fluoride-based ether solvent are $HCF_2CF_2CH_2OCF_2CF_2H$, $HCF_2CF_2CH_2OCF_2CH_3$, $CF_3CF_2CH_2OCF_2CF_2H$, $CF_3CF_2CH_2OCF_2H$, $HCF_2CF_2OCH_2CF_3$, $HCF_2CF_2CH_2OCF_2CFHCF_3$, $CF_3CF_2CH_2OCF_2CFHCF_3$, $HCF_2CF_2CH_2OCH_2CFHCF_3$, $CF_3CF_2CH_2OCH_2CFHCF_3$, and $HCF_2CF_2CH_2OCH_3$. From among the fluoride-based ether solvents, $HCF_2CF_2CH_2OCF_2CF_2H$, $HCF_2CF_2CH_2OCF_2CH_3$, $CF_3CF_2CH_2OCF_2H$, $HCF_2CF_2OCH_2CF_3$, and $HCF_2CF_2CH_2OCH_3$ may be used in consideration of their compatibility with other solvents and excellent rate characteristics.

The fluoride-based ether solvents may be used alone, or in combination of two or more different kinds of these materials.

The electrolyte includes the fluoride-based ether solvent in an amount of 3 vol% or more based on a total volume of the non-aqueous electrolytic solution. For example, the fluoride-based ether solvent may be 10 vol% or more, 20 vol% or more, or 30 vol% or more, based on the total volume of the non-aqueous electrolytic solution. For example, the amount of the fluoride-based ether solvent may be, based on the total volume of the non-aqueous electrolytic solution, in a range of about 3 to about 70 vol%, about 10 to about 70 vol%, about 10 to about 60 vol%, or about 10 to about 30 vol%. When the amount of the fluoride-based ether solvent is less than 3 vol%, a withstanding voltage property may decrease, and thus, an electrolytic solution may be oxidized at high voltage, and thus, a discharge capacity retention ratio may substantially decrease.

In a particularly preferred embodiment, the non-aqueous electrolytic solution of the electrolyte of the invention may comprise or consist of:

10 to 70 vol% $HCF_2CF_2CH_2OCF_2CF_2H$ (2,2,3,3-tetrafluoropropyl-1,1-2,2-tetrafluorethyl ether);
10 to 30 vol% fluoroethylene carbonate (FEC), preferably 20 to 30 vol% fluoroethylene carbonate (FEC); and
0 to 80 vol% dimethyl carbonate (DMC), preferably 5 to 75 vol% dimethyl carbonate (DMC).In addition, the electrolyte may further include an additive to form a stabilized solid electrolyte interface (SEI) on the surface of an electrode to prevent a reaction between the electrode and an electrolytic solution.

The additive is tris(trimethylsilyl) phosphate (TMSPa).

The additive may be included in an amount of about 0.01 to about 10 wt% based on the total weight of the non-aqueous electrolytic solution to form a stable SEI film. For example, the additive may be included in an amount of about 0.05 to about 10 wt%, about 0.1 to about 5 wt%, or about 0.5 to about 4 wt%, based on the total weight of the non-aqueous electrolytic solution to form a stable SEI film. The amount of the additive may not be limited as long as the additive does not cause a decrease in the increase in the capacity retention ratio of a lithium battery due to the inclusion of the electrolyte.

The non-aqueous electrolytic solution used in the electrolyte may act as a medium through which ions participating in an electrochemical reaction of a battery move.

The non-aqueous electrolytic solution may be a carbonate-based compound, an ester-based compound, an ether-based compound, a ketone-based compound, an alcohol-based compound, an aprotic solvent, or a combination thereof.

The carbonate-based compound may be a chain carbonate compound, a cyclic carbonate compound, a fluoro carbonate compound, or a combination thereof.

The chain carbonate compound may be, for example, diethyl carbonate (DEC), dimethyl carbonate (DMC), dipropyl carbonate (DPC), methylpropyl carbonate (MPC), ethylpropylcarbonate (EPC), methylethyl carbonate (MEC), or a combination thereof, and the cyclic carbonate compound may be, for example, ethylene carbonate (EC), propylenecarbonate (PC), butylene carbonate (BC), vinylethylene carbonate (VEC) or a combination thereof.

The fluoro carbonate compound may be, for example, fluoroethylene carbonate (FEC), 4,5-difluoroethylenecarbonate, 4,4-difluoroethylenecarbonate, 4,4,5-trifluoroethylenecarbonate, 4,4,5,5-tetrafluoroethylenecarbonate, 4-fluoro-5-methylethylenecarbonate, 4-fluoro-4-methylethylenecarbonate, 4,5-difluoro-4-methylethylenecarbonate, 4,4,5-trifluoro-5-methylethylenecarbonate, trifluoromethylethylenecarbonate, or a combination thereof.

The carbonate-based compound may also be a combination of chain and/or cyclic carbonate fluoro carbonate compounds. The fluoro carbonate compound may increase solubility of a lithium salt to increase ionic conductivity, and may aid the formation of a film on the negative electrode using the silicon-based negative active material. The fluoro carbonate compound may be used in an amount of 1 to 30 vol% of the total volume of the non-aqueous electrolytic solution. Within the range described above, desired effects may be obtained while a viscosity of the electrolyte may be maintained at an appropriate level.

The ester-based compound may be methylacetate, acetate, n-propylacetate, dimethylacetate, methylpropionate, ethylpropionate, γ-butyrolactone, decanolide, valerolactone, mevalonolactone, or caprolactone. The ether-based compound may be dibutyl ether, tetraglyme, diglyme, dimetoxyethane, 2-methyltetrahydrofurane, or tetrahydrofurane, and the ketone-based compound may be cyclohexanone. In addition, the alcohol-based compound may be ethylalcohol or isopropyl alcohol.

The aprotic solvent may be dimethylsulfoxide, 1,2-dioxolane, sulforane, methyl sulforane, 1,3-dimethyl-2-imidazolidinone, N-methyl-2-pyrrolidinone, formamide, dimethylformamide, acetonitrile, nitromethane, trimethyl phosphate, triethyl phosphate, trioctyl phosphate, or triester phosphate.

The non-aqueous electrolytic solutions may be used alone, or in combination of two or more different kinds thereof, and in the latter case, a mixed ratio may vary according to desired performance of a battery.

A lithium salt included in the electrolyte may act as a supplier of a lithium ion in a battery, enabling a basic operation of a lithium battery. The lithium salt may be any one of various materials that are typically used in a lithium battery. For example, a material that is easily dissolved in the non-aqueous based electrolyte may be used as the lithium salt, and examples of such a material are LiCl, LiBr, LiI, $LiClO_4$, $LiB_{10}Cl_{10}$, $LiPF_6$, $CF_3SO_3Li$, $CH_3SO_3Li$, $C_4F_3SO_3Li$, $(CF_3SO_2)_2NLi$, $LiN(C_xF_{2x+1}SO_2)(C_yF_{2+y}SO_2)$(here, x and y are natural number), $CF_3CO_2Li$, $LiAsF_6$, $LiSbF_6$, $LiAlCl_4$, $LiAlF_4$, lithiumchloroborate, low aliphatic lithium carbonate, 4 phenyl lithium borate, lithium imide, and a combination thereof.

The lithium salt may be used in a concentration of, for example, about 0.1 M to about 2.0M to secure practical performance of a lithium battery. When the concentration of a lithium salt is within this range, the electrolyte may have appropriate levels of conductivity and viscosity and thus excellent electrolyte performance may be obtained and also, lithium ions may effectively move.

A lithium battery with such a structure may be manufactured by using a typical method, and the method is not described in detail herein.

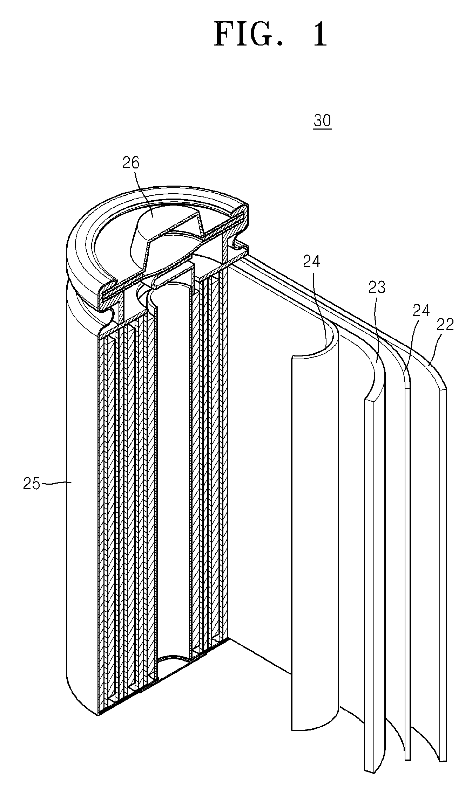

FIG. 1 is a schematic view of a secondary lithium battery 30 according to an embodiment of the present invention.

Referring to FIG. 1, the lithium battery 30 includes a positive electrode 23, a negative electrode 22, and a separator 24 disposed between the positive electrode 23 and the negative electrode 22. The positive electrode 23, the negative electrode 22, and the separator 24 are wound or folded to be placed in a battery case 25. Subsequently, an electrolyte is injected into the battery case 25 and the resultant structure is sealed with a sealing member 26, thereby completing the manufacturing of the lithium battery 30. The battery case 25 may be a cylindrical, rectangular, or thin-film shape. The lithium battery may be a lithium ion battery.

The positive electrode 23 may include a positive electrode current collector and a positive active material layer formed on the positive electrode current collector.

The positive electrode current collector may have a thickness of about 3 to about 500 $\mu$m. The positive current collector may not be particularly limited as long as it does not cause any chemical change in a secondary battery and has conductivity, and examples of a material for forming the positive current collector are copper, stainless steel, aluminum, nickel, titanium, calcined carbon, and copper or stainless steel that is surface-treated with carbon, nickel, titanium, silver, and an aluminum-cadmium alloy. In addition, the positive current collect may have a fine uneven structure at its surface to increase a binding force with respect to the positive active material, and the positive current collector may have various shapes, such as film, sheet, foil, net, porosity, foam, or non-woven shape.

The positive active material layer includes a positive active material, a binder, and selectively a conducting agent.

The positive active material includes an overlithiated lithium transition metal oxide with the layered structure described above.

The positive active material layer may further include other typical positive active materials in addition to the overlithiated lithium transition metal oxide.

The positive active material may be any one of various lithium-containing metal oxides that are typically used in the art. For example, at least one composite oxide of lithium and metal selected from cobalt, manganese, nickel, and a combination thereof may be used, and detailed examples thereof are compounds represented by: $Li_aA_{1-b}B_bD_2$(wherein, $0.90 \leq a \leq 1$, and $0 \leq b \leq 0.5$); $Li_aE_{1-b}B_bO_{2-c}D_c$(wherein, $0.90 \leq a \leq 1$, $0 \leq b \leq 0.5$, $0 \leq c \leq 0.05$); $LiE_{2-b}B_bO_{4-c}D_c$(wherein, $0 \leq b \leq 0.5$, and $0 \leq c \leq 0.05$); $Li_aNi_{1-b-c}Co_bB_cD_\alpha$(wherein, $0.90 \leq a \leq 1$, $0 \leq b \leq 0.5$, $0 \leq c \leq 0.05$, and $0 < \alpha \leq 2$); $Li_aNi_{1-b-c}Co_bB_cO_{2-\alpha}F_a$(wherein, $0.90 \leq a \leq 1$, $0 \leq b \leq 0.5$, $0 \leq c \leq 0.05$, and $0 < \alpha < 2$); $Li_aNi_{1-b-c}Co_bB_cO_{2-\alpha}F_2$(wherein, $0.90 \leq a \leq 1$, $0 \leq b \leq 0.5$, $0 \leq c \leq 0.05$, and $0 < \alpha < 2$); $Li_aNi_{1-b-c}Mn_bB_cD_\alpha$(wherein, $0.90 \leq a \leq 1$, $0 \leq b \leq 0.5$, $0 \leq c \leq 0.05$, and $0 < \alpha \leq 2$); $Li_aNi_{1-b-c}Mn_bB_cO_{2-\alpha}F_\alpha$(wherein, $0.90 \leq a \leq 1$, $0 \leq b \leq 0.5$, $0 \leq c \leq 0.05$, and $0 < \alpha < 2$); $Li_aNi_{1-b-c}Mn_bB_cO_{2-\alpha}F_2$(wherein, $0.90 \leq a \leq 1$, $0 \leq b \leq 0.5$, $0 \leq c \leq 0.05$, and $0 < \alpha < 2$); $Li_aNi_bE_cG_dO_2$(wherein, $0.90 \leq a \leq 1$, $0 \leq b \leq 0.9$, $0 \leq c \leq 0.5$, and $0.001 \leq d \leq 0.1$); $Li_aNi_bCo_cMn_dGeO_2$(wherein, $0.90 \leq a \leq 1$, $0 \leq b \leq 0.9$, $0 \leq c \leq 0.5$, and $0 \leq d \leq 0.5$, $0.001 \leq e \leq 0.1$); $Li_aNiG_bO_2$(wherein, $0.90 \leq a \leq 1$, $0.001 \leq b \leq 0.1$.); $Li_aCoG_bO_2$(wherein, $0.90 \leq a \leq 1$, $0.001 \leq b \leq 0.1$); $Li_aMnG_bO_2$(wherein, $0.90 \leq a \leq 1$, and $0.001 \leq b \leq 0.1$); $Li_aMn_2G_bO_4$(wherein, $0.90 \leq a \leq 1$, and $0.001 \leq b \leq 0.1$); $QO_2$; $QS_2$; $LiQS_2$; $V_2O_5$; $LiV_2O_5$; $LiIO_2$; $LiNiVO_4$; $Li_{(3-f)}J_2(PO_4)_3(0 \leq f \leq 2)$; $Li_{(3-f)}Fe_2(PO_4)_3(0 \leq f \leq 2)$; and $LiFePO_4$.

In the formulae above, A is Ni, Co, Mn, or a combination thereof; B is Al, Ni, Co, Mn, Cr, Fe, Mg, Sr, V, a rare-earth element, or a combination thereof; D is O, F, S, P, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof.

For example, $LiCoO_2$, $LiMn_xO_{2x}$(x=1, 2), $LiNi_{1-x}Mn_xO_{2x}$(0<x<1), $LiNi_{1-x-y}Co_xMn_yO_2$ ($0 \leq x \leq 0.5$, $0 \leq y \leq 0.5$), or $FePO_4$ may be used.

These compounds may have a coating layer on their surfaces, or these compounds may be mixed with a compound having a coating layer. The coating layer may include an oxide of a coating element, a hydroxide of a coating element, an oxyhydroxide of a coating element, an oxycarbonate of a coating element, or a hydroxycarbonate of a coating element. These compounds that form the coating layer may be amorphous or crystalline.

As a coating element included in the coating layer, Mg, Al, Co, K, Na, Ca, Si, Ti, V, Sn, Ge, Ga, B, As, Zr, or a mixture thereof may be used. The coating layer may be formed by using any one of various coating methods that are performed using the compounds and the elements and do not affect properties of the positive active material (For example, spray coating, immersion, or the like). These coating methods are obvious to one of ordinary skill in the art and thus, are not described in detail herein.

The binder may be any one of various materials that enable positive active material particles to attach to each other and that enable the positive active material to attach to the positive current collector. Detailed examples thereof are polyvinylalcohol, carboxymethylcellulose, hydroxypropylcellulose, diacetylcellulose, polyvinylchloride, carboxylated polyvinylchloride, polyvinylfluoride, ethylene oxide-containing polymer, polyvinylpyrrolidon, polyurethane, polytetrafluoroethylene, polyvinylidene fluoride, polyethylene, polypropylene, styrene-butadiene rubber, acrylated styrene-butadiene rubber, epoxy resin, and nylon.

The conducting agent is used to provide conductivity to an electrode, and may be any one of various electrically conductive materials that do not cause any chemical changes. Examples thereof are natural graphite, artificial graphite, carbon black, acetylene black, ketjen black, carbon fiber, and metal powder or fiber of copper, nickel, aluminum, or silver.

The negative electrode 22 may include a negative electrode current collector and a negative active material layer formed on the positive electrode current collector.

The negative electrode current collector may have a thickness of about 3 to about 500 $\mu$m. The negative current collector may not be particularly limited as long as it does not cause any chemical change in a secondary battery and has conductivity, and examples of a material for forming the negative current collector are copper, stainless steel, aluminum, nickel, titanium, calcined carbon, and copper or stainless steel that is surface treated with carbon, nickel, titanium, silver, and an aluminum-cadmium alloy. In addition, the negative current collect may have a fine uneven structure to increase a binding force with respect to an electrode active material, and the negative current collector may have various shapes, such as film, sheet, foil, net, porosity, foam, or non-woven shape.

The negative active material layer includes a negative active material, a binder, and selectively a conducting agent.

The negative active material may include the silicon-based negative active material described above.

The negative active material layer may additionally include, in addition to the silicon-based negative active material, other typical negative active materials.

The negative active material may be any one of various lithium-containing metal oxides that are typically used in the art. For example, lithium metal, lithium-alloyable metal, a transition metal oxide, a lithium-dopable and undopable material, or a material that enables reversible intercalation and deintercalation of lithium ions may be used, and two or more different kinds of these materials may be used in a mixed or combined form.

As an alloy of the lithium metal, an ally of lithium and metal selected from the group consisting of Na, K, Rb, Cs, Fr, Be, Mg, Ca, Sr, Si, Sb, Pb, In, Zn, Ba, Ra, Ge, Al, and Sn may be used.

Unlimiting examples of the transition metal oxide are tungsten oxide, molybdenum oxide, titanium oxide, lithium titanium oxide, vanadium oxide, and lithium vanadium oxide.

The lithium-dopable and undopable material may be, for example, Sn, $SnO_2$, or a Sn-Y alloy (wherein Y is an alkali metal, alkali earth metal, Group 11 element, Group 12 element, Group 13 element, Group 14 element, Group 15 element, Group 16 element, transition metal, rare earth element or a combination thereof, and is not Sn). The element Y may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof.

The material that enables reversible intercalation and deintercalation of lithium ions may be any one of various carbonaceous materials that are typically used as a carbonaceous negative active material in a lithium battery. For example, a crystalline carbon, amorphous carbon, or a mixture thereof may be used. The crystalline carbon may be natural graphite, artificial graphite, expandable, graphite, graphene, fullerene soot, carbon nanotube, or carbon fiber, but is not limited thereto. The amorphous carbon may be soft carbon (low temperature calcined carbon), hard carbon, mesophase pitch carbide, or calcined corks, and is not limited thereto. The carbon-based negative active material may be spherical, tabular, fibrous, tube-shapes, or powder.

The binder may be any one of various materials that enable negative active material particles to attach to each other and that enable the negative active material to attach to a current collector. Detailed examples thereof are polyvinylalcohol, carboxymethylcellulose, hydroxypropylcellulose, polyvinylchloride, carboxylated polyvinyl chloride, polyvinyl fluoride, ethylene oxide-containing polymer, polyvinylpyrrolidon, polyurethane, polytetrafluoroethylene, polyvinylidene fluoride, polyethylene, polypropylene, styrene-butadiene rubber, acrylated styrene-butadiene rubber, epoxy resin, and nylon.

The conducting agent is used to provide conductivity to an electrode, and may be any one of various electrically conductive materials that do not cause any chemical changes. Examples thereof are: a carbonaceous material, such as natural graphite, artificial graphite, carbon black, acetylene black, ketjen black, carbon fiber; metal powder or fiber of copper, nickel, aluminum, or silver; and a conducting polymer, such as polyphenylene derivative; or a mixture thereof.

Each of the positive electrode 23 and the negative electrode 22 is manufactured by mixing an active material, a conducting agent, and a binder in a solvent to prepare an active material composition and doping the composition on a current collector.

This manufacturing method is well known in the art, and thus, a detailed description thereof will be omitted herein. The solvent may be N-methylpyrrolidone (NMP), acetone, water, or the like, and is not limited thereto.

The positive electrode 23 and the negative electrode 22 may be separated by the separator 24, and the separator 24 may be any one of various materials that are typically used in a lithium battery. For example, a material that has low resistance to ion migration of an electrolyte and has excellent electrolytic solution retaining capability is suitable for a material for forming the separator. For example, the separator 24 may be a single-layered film or a multi-layered film, and a material for forming the separator may be selected from glass fiber, polyester, Teflon, polyethylene, polypropylene, polytetrafluoroethylene (PTFE), and a combination thereof, each of which may be in a non-woven fabric or woven fabric form. The separator may have a pore size of about 0.01 to about 10 $\mu$m, and a thickness of about 3 to about 100 $\mu$m.

The electrolyte may be a lithium salt-containing non-aqueous based electrolyte that includes a fluoride-based ether solvent in a relative amount with respect to the total volume of the non-aqueous electrolytic solution.

The lithium battery may be suitable for, in addition to mobile phones and portable computers, applications requiring high capacity, high performance, and high-temperature driving, such as electric vehicles. In addition, the lithium battery may be combined with typical internal combustion engine, a fuel battery, or a super capacitor for use in hybrid vehicles. In addition, the lithium battery may be used in other various applications that require high output, high voltage, and high-temperature driving. Such applications are electric vehicles, machine tools, etc

Embodiments of the present invention are further described in detail with Examples and Comparative Examples. However, Examples are presented herein for illustrative purpose only.

**Example 1**

A composite positive active material powder with a composition of $0.45LiNi_{0.5}Co_{0.2}Mn_{0.3}O_2$ - $0.55Li_2MnO_3$, which is a positive active material, and a carbon conducting agent (Super-P; Timcal Ltd.) are uniformly mixed at a weight ratio of 90:5, and then, a polyvinylidene fluoride (PVDF) binder solution was added thereto to prepare an active material slurry of weight ratio 90:5:5 of active material:carbon conducting agent:binder. The active material slurry was coated on an aluminum foil with a thickness of 15 $\mu$m, and then dried and pressed, thereby completing the manufacturing of a positive electrode.

A Si-Ti-Ni-based Si-alloy (an atomic ratio of Si:Ti:Ni was 68:16:16, and an average particle size thereof was 5 $\mu$m), which is a negative active material, LSR7 (manufacturer: Hitachi Chemical, a binder including PAI 23wt%, and N-methyl-2-pyrrolidone 97wt%), which is a binder, and Ketjen Black, which is a conducting agent, were mixed at a mixed ratio of 84:4:8, and then, N-methylpyrrolidone was added to the mixture to control a viscosity thereof to make a solid content to be 60 wt%, thereby preparing a negative active material slurry. The negative active material slurry was coated on a copper foil current collector with a thickness of 10 $\mu$m, and then, dried and pressed, thereby completing the manufacturing a negative electrode.

As a separator, a 20 $\mu$m-thick polyethylene film coated with an inorganic and organic material of PVDF and $Mg(OH)_2$ at a weight ratio of 40:60 was used. The positive electrode, the negative electrode, and the separator were used and an electrolyte was injected thereto to manufacture a lithium battery. In this regard, the electrolyte was prepared as follows: fluoroethylene carbonate, dimethylcarbonate, and 2,2,3,3-tetrafluoropropyl-1,1,2,2-tetrafluoroethyl ether, which is a fluoro ether solvent, were mixed at a volumetric ratio of 25:72:3 to prepare a mixed solvent, and then, $LiPF_6$ was added to the mixed solvent until a concentration thereof was 1.3M, and tris trimethylsilyl phosphate was added thereto in an amount of 2 wt% based on the total weight of the non-aqueous electrolytic solution.

**Example 2**

A lithium battery was manufactured in the same manner as in Example 1, except that a mixed ratio of fluoro ethylene carbonate, dimethylcarbonate, and fluoro ether in the electrolyte was 25:65:10.

**Example 3**

A lithium battery was manufactured in the same manner as in Example 1, except that a mixed ratio of fluoro ethylene carbonate, dimethylcarbonate, and fluoro ether in the electrolyte was 25:45:30.

**Example 4**

A lithium battery was manufactured in the same manner as in Example 1, except that a mixed ratio of fluoro ethylene carbonate, dimethylcarbonate, and fluoro ether in the electrolyte was 25:15:60.

## Example 5

A lithium battery was manufactured in the same manner as in Example 1, except that a mixed ratio of fluoro ethylene carbonate, dimethylcarbonate, and fluoro ether in the electrolyte was 25:5:70.

## Example 6

A lithium battery was manufactured in the same manner as in Example 3, except that a mixed ratio of fluoro ethylene carbonate, dimethylcarbonate, and fluoro ether in the electrolyte was 25:55:20, and tris trimethylsilyl phosphate was not used.

## Example 7 not falling under the present invention

A lithium battery was manufactured in the same manner as in Example 1, except that a mixed ratio of fluoro ethylene carbonate, dimethylcarbonate, and fluoro ether in the electrolyte was 25:45:30, and tris trimethylsilyl phosphate was not used.

## Example 8 not falling under the present invention

A lithium battery was manufactured in the same manner as in Example 3, except that 2.0 wt% of lithium difluorooxalatoborate (LiFOB) was further added to the electrolyte based on the total weight of the non-aqueous electrolytic solution.

## Example 9 not falling under the present invention

A lithium battery was manufactured in the same manner as in Example 3, except that 2.0 wt% of vinylcarbonate (VC) was further added to the electrolyte based on the total weight of the non-aqueous electrolytic solution.

## Example 10 not falling under the present invention

A lithium battery was manufactured in the same manner as in Example 3, except that 2.0 wt% of propansultone (PS) was further added to the electrolyte based on the total weight of the non-aqueous electrolytic solution.

## Example 11 not falling under the present invention

A lithium battery was manufactured in the same manner as in Example 3, except that 2.0 wt% of succinonitrile (SN) was further added to the electrolyte based on the total weight of the non-aqueous electrolytic solution.

## Example 12 not falling under the present invention

A lithium battery was manufactured in the same manner as in Example 3, except that 0.5 wt% of $LiBF_4$ was further added to the electrolyte based on the total weight of the non-aqueous electrolytic solution.

## Example 13 not falling under the present invention

A lithium battery was manufactured in the same manner as in Example 3, except that 2.0 wt% of hexamethyldisilazane was further added to the electrolyte based on the total weight of the non-aqueous electrolytic solution.

## Example 14 not falling under the present invention

A lithium battery was manufactured in the same manner as in Example 3, except that 0.5 wt% of $LiBF_4$, 2 wt% of propansultone (PS), and 1 wt% of succinonitrile (SN) were further added to the electrolyte based on the total weight of the non-aqueous electrolytic solution.

## Comparative Example 1

A lithium battery was manufactured in the same manner as in Example 1, except that fluoro ether was not used, and fluoro ethylene carbonate and dimethylcarbonate were mixed at a mixed ratio of 25:75 to prepare a mixed solvent, and tris trimethylsilyl phosphate was not added.

**Evaluation Example 5: Evaluation of battery characteristics**

Lifespan characteristics of the batteries manufactured according to Examples 1-14 and Comparative Example 1 were evaluated.

Charging and discharging tests were performed at room temperature of 25°C, and an initial formation efficiency was evaluated at 0.1C charing/0.1C discharging, and lifespan characteristics were evaluated by repeating a cycle of 1C charging/1C discharging 200 times. Lifespan characteristics are calculated as a capacity retention ratio defined by Equation 1 below.

<Equation 1>

Capacity retention ratio [%]=[discharge capacity at each cycle/discharge capacity in a first cycle]×100

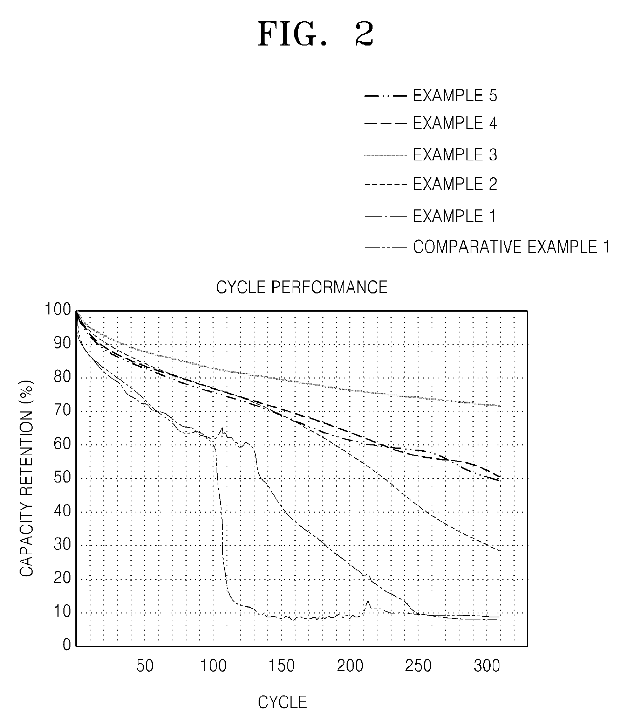

To identify lifespan characteristics according to an amount of the fluoride-based ether solvent, capacity retention ratios of the lithium batteries manufactured according to Examples 1-5 and Comparative Example 1 were measured, and results thereof are shown in FIG. 2.

As illustrated in FIG. 2, when the fluoride-based ether solvent is included in an amount of 3 vol% or more in the non-aqueous electrolytic solution, a capacity retention ratio increases. When the fluoride-based ether solvent is not included at all, withstanding voltage property decreases, and thus, at high voltages, an electrolytic solution is oxidized and a capacity retention ratio rapidly decreases. In addition, when the amount of the fluoride-based ether solvent is 10 vol% or more, lifespan characteristics are improved substantially, and at 30 vol%, lifespan characteristics are the best.

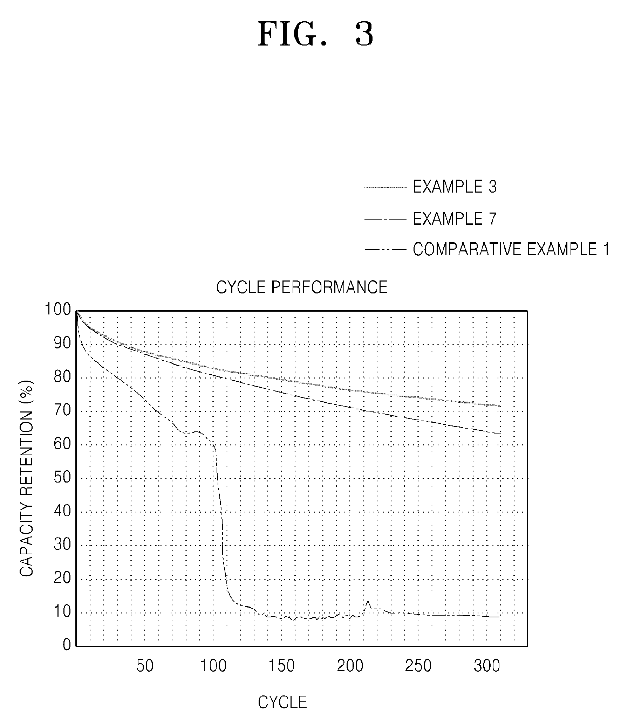

In addition, to identify lifespan characteristics according to an additive, capacity retention ratios of the lithium batteries manufactured according to Example 3, Example 7, and Comparative Example 1 were measured and results thereof are shown in FIG. 3.

As illustrated in FIG. 3, compared to Comparative Example 1 in which the fluoride-based ether solvent and the tris trimethylsilyl phosphate additive were not used, a capacity retention ratio of Example 7 in which the fluoride-based ether solvent was used, was substantially improved. This shows that the use of the fluoride-based ether solvent contributes to oxidation-resistance property stability at high voltages.

In addition, the capacity retention ratio of Example 3 in which tris trimethylsilyl phosphate was further added together with the fluoride-based ether solvent, was further improved. This may be because the tris trimethylsilyl phosphate additive may form a stable SEI film on a positive electrode to prevent leakage of metal ions from the positive electrode to increase a capacity retention ratio.

**Claims**

1.   Lithium battery comprising:

a positive electrode including an over-lithiated lithium transition metal oxide with a layered structure;
a negative electrode including a silicon-based negative active material; and
an electrolyte, which is interposed between the positive electrode and the negative electrode, wherein the electrolyte comprises a lithium salt, a non-aqueous electrolytic solution, and an additive to form a stabilized solid electrolyte interface (SEI) on the surface of an electrode of the lithium battery, the additive being tris(trimethylsilyl) phosphate (TMSPa),
wherein the non-aqueous electrolytic solution comprises fluoride-based ether in an amount of at least 3 vol% based on the total volume of the non-aqueous electrolytic solution.

2.   Lithium battery of claim 1, wherein the fluoride-based ether in the non-aqueous electrolytic solution is present in an amount of at least 10 vol% based on the total volume of the non-aqueous electrolytic solution.

3.   Lithium battery of claim 1 or 2, wherein the amount of the fluoride-based ether in the non-aqueous electrolytic solution is in the range of 10 to 70 vol% based on the total volume of the non-aqueous electrolytic solution.

4. Lithium battery of claim 1, 2 or 3, wherein the fluoride-based ether comprises at least one compound represented by Formula 4, Formula 5 or Formula 6; with

$$Rf1-O-Rf2 \qquad [Formula\ 4]$$

wherein Rf1 and Rf2 are each independently a linear or branched C1 to C12 fluoroalkyl group having at least one hydrogen atoms substituted with a fluoro group;

$$Rf1-O-R \qquad [Formula\ 5]$$

wherein Rf1 is a linear or branched C1 to C12 fluoroalkyl group having at least one hydrogen atoms substituted with a fluoro group, and R is a linear or branched C1 to C12 alkyl group;

$$Rf1-O-(R'-O)_n-Rf2 \qquad [Formula\ 6]$$

wherein Rf1 and Rf2 are each independently a linear or branched C1 to C12 fluoroalkyl group having at least one hydrogen atoms substituted with a fluoro group, and R' is a linear or branched C1 to C5 alkylene group, and n is an integer of 1 to 5.

5. Lithium battery of claim 4, wherein Rf1 or Rf2 is a fluoroalkyl group selected from $HCF_2-$, $CF_3-$, $HCF_2CF_2-$, $CH_3CF_2-$, $CF_3CH_2-$, $CF_3CF_2-$, $(CF_3)_2CH-$, $HCF_2CF_2CH_2-$, $CF_3CH_2CH_2-$, $HCF_2CF_2CF_2CH_2-$, $HCF_2CF_2CF_2CF_2CH_2-$, $CF_3CF_2CH_2-$, $CF_3CFHCF_2CH_2-$, $HCF_2CF(CF_3)CH_2-$, or $CF_3CF_2CH_2CH_2-$.

6. Lithium battery of claim 4 or 5, wherein R is an alkyl group selected from $-CH_3$, $-C_2H_5$, $-C_3H_7$, or $-CH(CH_3)CH_3$.

7. Lithium battery of claim 4, 5 or 6, wherein R' is an alkylene group selected from $-CH_2-$, $-CH_2CH_2-$, or $-CH_2CH_2CH_2-$.

8. Lithium battery according to one of the preceding claims, wherein the non-aqueous electrolytic solution further comprises a carbonate-based compound, an ester-based compound, an ether-based compound, a ketone-based compound, an alcohol-based compound, an aprotic solvent, or a combination thereof.

9. Lithium battery according to one of the preceding claims, wherein the non-aqueous electrolytic solution comprises or consists of:

   10 to 70 vol% fluoride-based ether;
   10 to 30 vol% fluoro carbonate compound; and
   0 to 80 vol% chain carbonate compound.

10. Lithium battery of claim 9, wherein
    the fluoride-based ether is selected from $HCF_2CF_2CH_2OCF_2CF_2H$, $HCF_2CF_2CH_2OCF_2CH_3$, $CF_3CF_2CH_2OCF_2CF_2H$, $CF_3CF_2CH_2OCF_2H$, $HCF_2CF_2OCH_2CF_3$, $HCF_2CF_2CH_2OCF_2CFHCF_3$, $CF_3CF_2CH_2OCF_2CFHCF_3$, $HCF_2CF_2CH_2OCH_2CFHCF_3$, $CF_3CF_2CH_2OCH_2CFHCF_3$, and $HCF_2CF_2CH_2OCH_3$;
    the fluoro carbonate compound is selected from fluoroethylene carbonate (FEC), 4,5-difluoroethylenecarbonate, 4,4-difluoroethylenecarbonate, 4,4,5-trifluoroethylenecarbonate, 4,4,5,5-tetrafluoroethylenecarbonate, 4-fluoro-5-methylethylenecarbonate, 4-fluoro-4-methylethylenecarbonate, 4,5-difluoro-4-methylethylenecarbonate, 4,4,5-trifluoro-5-methylethylenecarbonate, trifluoromethylethylenecarbonate; and
    the chain carbonate compound is selected from diethyl carbonate (DEC), dimethyl carbonate (DMC), dipropyl carbonate (DPC), methylpropyl carbonate (MPC), ethylpropylcarbonate (EPC), methylethyl carbonate (MEC).

11. Lithium battery according to claim 1, wherein the additive is present in an amount of 0.01 to 10 wt% based on the total weight of the non-aqueous electrolytic solution to form a stable SEI film.

12. Lithium battery according to one of the preceding claims, wherein the overlithiated lithium transition metal oxide includes a compound represented by Formula 1 below:

$$xLi_2MO_3-(1-x)LiM'O_2 \qquad [Formula\ 1]$$

wherein 0<x<1,

13

M is at least one metal selected from Period 4 transition metals and Period 5 transition metals, having a mean oxidation number of +4, and

M' is at least one metal selected from Period 4 transition metals and Period 5 transition metals, having a mean oxidation number of +3.

13. Lithium battery according to one of the preceding claims, wherein the overlithiated lithium transition metal oxide includes at least one compound represented by Formulae 2 to 5 below:

$$\text{<Formula 2>} \qquad x\text{Li}_2\text{MnO}_3\text{-(1-x)LiNi}_a\text{CO}_b\text{Mn}_c\text{O}_2,$$

wherein $0<x<1$, $0<a<1$, $0<b<1$, $0<c<1$, and $a+b+c=1$;

$$\text{<Formula 3>} \qquad x\text{Li}_2\text{MO}_3\text{-yLiM'O}_2\text{-zLi}_{1+d}\text{M''}_{2-d}\text{O}_4,$$

wherein $x+y+z=1$, $0<x<1$, $0<y<1$, $0<z<1$, and $0\leq d\leq 0.33$, M is at least one metal selected from Period 4 transition metals and Period 5 transition metals having a mean oxidation number of +4, M' is at least one metal selected from Period 4 transition metals and Period 5 transition metals having a mean oxidation number of +3, and M" is at least one metal selected from Period 4 transition metals and Period 5 transition metals having a combined mean oxidation number of +3 or +4;

$$\text{<Formula 4>} \qquad \text{Li}[\text{Li}_x\text{Me}_y]\text{O}_{2+d},$$

wherein $x+y=1$, $0<x<1$, $0\leq d\leq 0.1$, and Me is at least one metal selected from the group consisting of Mn, V, Cr, Fe, Co, Ni, Zr, Re, Al, B, Ge, Ru, Sn, Ti, Nb, Mo, and Pt; and

$$\text{<Formula 5>} \qquad \text{Li}[\text{Li}_x\text{Ni}_a\text{CO}_b\text{Mn}_c]\text{O}_{2+d},$$

wherein $x+a+b+c=1$, $0<x<1$, $0<a<1$, $0<b<1$, $0<c<1$, and $0\leq d\leq 0.1$.

14. Lithium battery according to one of the preceding claims, wherein the silicon-based negative active material includes a material selected from the group consisting of Si, $\text{SiO}_x(0<x<2)$, Si-Z alloy, wherein Z is alkali metal, alkali earth metal, a Group 11 element, a Group 12 element, a Group 13 element, a Group 14 element, a Group 15 element, a Group 16 element, a transition metal, a rare earth element, or a combination thereof, and is not Si, and a combination thereof.

**Patentansprüche**

1. Lithiumbatterie, aufweisend:

eine positive Elektrode, die ein überlithiiertes Lithium-Übergangsmetalloxid mit einer gemusterten Struktur aufweist;

eine negative Elektrode, die ein negatives aktives Material auf Siliziumbasis aufweist; und

einen Elektrolyt, der zwischen die positive Elektrode und die negative Elektrode eingefügt ist, wobei der Elektrolyt ein Lithiumsalz, eine nicht-wässrige Elektrolytlösung und ein Additiv zum Ausbilden einer stabilisierten "solid electrolyte interface" (SEI) auf der Oberfläche einer Elektrode der Lithiumbatterie aufweist, wobei das Additiv Tris(trimethylsilyl)phosphat (TMSPa) ist,

wobei die nicht-wässrige Elektrolytlösung Ether auf Fluoridbasis in einer Menge von zumindest 3 Vol.-%, bezogen auf das Gesamtvolumen der nicht-wässrigen Elektrolytlösung, aufweist.

2. Lithiumbatterie nach Anspruch 1, wobei der Ether auf Fluoridbasis in der nicht-wässrigen Elektrolytlösung in einer Menge von zumindest 10 Vol.-%, bezogen auf das Gesamtvolumen der nicht-wässrigen Elektrolytlösung, vorliegt.

3. Lithiumbatterie nach Anspruch 1 oder 2, wobei die Menge des Ethers auf Fluoridbasis in der nicht-wässrigen Elektrolytlösung im Bereich von 10 bis 70 Vol.-%, bezogen auf das Gesamtvolumen der nicht-wässrigen Elektrolytlösung, liegt.

4. Lithiumbatterie nach Anspruch 1, 2 oder 3, wobei der Ether auf Fluoridbasis zumindest eine Verbindung, die durch Formel 4, Formel 5 oder Formel 6 dargestellt ist, aufweist; wobei

$$Rf1-O-Rf2 \qquad [Formel\ 4]$$

wobei Rf1 und Rf2 jeweils unabhängig voneinander eine lineare oder verzweigte C1- bis C12-Fluoralkylgruppe sind, die zumindest ein Wasserstoffatom, das mit einer Fluorgruppe substituiert ist, aufweist;

$$Rf1-O-R \qquad [Formel\ 5]$$

wobei Rf1 eine lineare oder verzweigte C1- bis C12-Fluoralkylgruppe ist, die zumindest ein Wasserstoffatom, das mit einer Fluorgruppe substituiert ist, aufweist und R eine lineare oder verzweigte C1- bis C12-Alkylgruppe ist;

$$Rf1-O-(R'-O)_n-Rf2 \qquad [Formel\ 6]$$

wobei Rf1 und Rf2 jeweils unabhängig voneinander eine lineare oder verzweigte C1- bis C12-Fluoralkylgruppe sind, die zumindest ein Wasserstoffatom, das mit einer Fluorgruppe substituiert ist, aufweist und R' eine lineare oder verzweigte C1- bis C5-Alkylengruppe ist und n eine Ganzzahl von 1 bis 5 ist.

5. Lithiumbatterie nach Anspruch 4, wobei Rf1 oder Rf2 eine Fluoralkylgruppe ausgewählt aus $HCF_2-$, $CF_3-$, $HCF_2CF_2-$, $CH_3CF_2-$, $CF_3CH_2-$, $CF_3CF_2-$, $(CF_3)_2CH-$, $HCF_2CF_2CH_2-$, $CF_3CH_2CH_2-$, $HCF_2CF_2CF_2CH_2-$, $HCF_2CF_2CF_2CF_2CH_2-$, $CF_3CF_2CH_2-$, $CF_3CFHCF_2CH_2-$, $HCF_2CF(CF_3)CH_2-$ oder $CF_3CF_2CH_2CH_2-$ ist.

6. Lithiumbatterie nach Anspruch 4 oder 5, wobei R eine Alkylgruppe ausgewählt aus $-CH_3$, $-C_2H_5$, $-C_3H_7$ oder $-CH(CH_3)CH_3$ ist.

7. Lithiumbatterie nach Anspruch 4, 5 oder 6, wobei R' eine Alkylengruppe ausgewählt aus $-CH_2-$, $-CH_2CH_2-$ oder $-CH_2CH_2CH_2-$ ist.

8. Lithiumbatterie nach einem der vorhergehenden Ansprüche, wobei die nicht-wässrige Elektrolytlösung ferner eine Verbindung auf Carbonatbasis, eine Verbindung auf Esterbasis, eine Verbindung auf Etherbasis, eine Verbindung auf Ketonbasis, eine Verbindung auf Alkoholbasis, ein aprotisches Lösungsmittel oder eine Kombination derselben aufweist.

9. Lithiumbatterie nach einem der vorhergehenden Ansprüche, wobei die nicht-wässrige Elektrolytlösung Folgendes aufweist oder aus Folgendem besteht:

10 bis 70 Vol.-% Ether auf Fluoridbasis;
10 bis 30 Vol.-% Fluorcarbonatverbindung; und
0 bis 80 Vol.-% Kettencarbonatverbindung.

10. Lithiumbatterie nach Anspruch 9, wobei
der Ether auf Fluoridbasis aus $HCF_2CF_2CH_2OCF_2CF_2H$, $HCF_2CF_2CH_2OCF_2CH_3$, $CF_3CF_2CH_2OCF_2CF_2H$, $CF_3CF_2CH_2OCF_2H$, $HCF_2CF_2OCH_2CF_3$, $HCF_2CF_2CH_2OCF_2CFHCF_3$, $CF_3CF_2CH_2OCF_2CFHCF_3$, $HCF_2CF_2CH_2OCH_2CFHCF_3$, $CF_3CF_2CH_2OCH_2CFHCF_3$ und $HCF_2CF_2CH_2OCH_3$ ausgewählt ist;
die Fluorcarbonatverbindung aus Fluorethylencarbonat (FEC), 4,5-Difluorethylencarbonat, 4,4-Difluorethylencarbonat, 4,4,5-Trifluorethylencarbonat, 4,4,5,5-Tetrafluorethylencarbonat, 4-Fluor-5-Methylethylencarbonat, 4-Fluor-4-Methylethylencarbonat, 4,5-Difluor-4-Methylethylencarbonat, 4,4,5-Trifluor-5-Methylethylencarbonat, Trifluormethylethylencarbonat ausgewählt ist; und
die Kettencarbonatverbindung aus Diethylcarbonat (DEC), Dimethylcarbonat (DMC), Dipropylcarbonat (DPC), Methylpropylcarbonat (MPC), Ethylpropylcarbonat (EPC), Methylethylcarbonat (MEC) ausgewählt ist.

11. Lithiumbatterie nach Anspruch 1, wobei das Additiv in einer Menge von 0,01 bis 10 Gew.-%, bezogen auf das Gesamtgewicht der nicht-wässrigen Elektrolytlösung, zum Ausbilden eines stabilen SEI-Films vorliegt.

12. Lithiumbatterie nach einem der vorhergehenden Ansprüche, wobei das überlithiierte Lithium-Übergangsmetalloxid eine Verbindung, die durch die unten stehende Formel 1 dargestellt ist, aufweist:

$$xLi_2MO_3-(1-x)LiM'O_2 \qquad [Formel\ 1]$$

wobei 0<x<1,

wobei M zumindest ein Metall ausgewählt aus Übergangsmetallen der 4. Periode und Übergangsmetallen der 5. Periode, die eine mittlere Oxidationszahl von +4 aufweisen, ist, und

M' zumindest ein Metall ausgewählt aus Übergangsmetallen der 4. Periode und Übergangsmetallen der 5. Periode, die eine mittlere Oxidationszahl von +3 aufweisen, ist.

13. Lithiumbatterie nach einem der vorhergehenden Ansprüche, wobei das überlithiierte Lithium-Übergangsmetalloxid zumindest eine Verbindung, die durch die unten stehenden Formeln 2 bis 5 dargestellt ist, aufweist:

<Formel 2>   $xLi_2MnO_3\text{-}(1\text{-}x)LiNi_aCo_bMn_cO2,$

wobei 0<x<1, 0<a<1, 0<b<1, 0<c<1 und a+b+c=1;

<Formel 3>   $xLi_2MO_3\text{-}yLiM'O_2\text{-}zLi_{1+d}M''_{2-d}O_4,$

wobei x+y+z=1, 0<x<1, 0<y<1, 0<z<1, und $0{\leq}d{\leq}0{,}33$, wobei M zumindest ein Metall ausgewählt aus Übergangsmetallen der 4. Periode und Übergangsmetallen der 5. Periode, die eine mittlere Oxidationszahl von +4 aufweisen, ist, wobei M' zumindest ein Metall ausgewählt aus Übergangsmetallen der 4. Periode und Übergangsmetallen der 5. Periode, die eine mittlere Oxidationszahl von +3 aufweisen, ist und wobei M" zumindest ein Metall ausgewählt aus Übergangsmetallen der 4. Periode und Übergangsmetallen der 5. Periode, die eine kombinierte mittlere Oxidationszahl von +3 oder +4 aufweisen, ist;

<Formel 4>   $Li[Li_xMe_y]O_{2+d},$

wobei x+y=1, 0<x<1, $0{\leq}d{\leq}0{,}1$ und Me zumindest ein Metall ausgewählt aus der Gruppe bestehend aus Mn, V, Cr, Fe, Co, Ni, Zr, Re, Al, B, Ge, Ru, Sn, Ti, Nb, Mo und Pt ist; und

<Formel 5>   $Li[Li_xNi_aCo_bMn_c]O_{2+d},$

wobei x+a+b+c=1, 0<x<1, 0<a<1, 0<b<1, 0<c<1 und $0{\leq}d{\leq}0{,}1$.

14. Lithiumbatterie nach einem der vorhergehenden Ansprüche, wobei das negative aktive Material auf Siliziumbasis ein Material ausgewählt aus der Gruppe bestehend aus Si, $SiO_x$(0<x<2), Si-Z-Legierung - wobei Z ein Alkalimetall, ein Alkalierdmetall, ein Element der Gruppe 11, ein Element der Gruppe 12, ein Element der Gruppe 13, ein Element der Gruppe 14, ein Element der Gruppe 15, ein Element der Gruppe 16, ein Übergangsmetall, ein Metall der Seltenen Erden oder eine Kombination derselben ist und nicht Si ist - und einer Kombination derselben ist.

**Revendications**

1. Batterie au lithium comprenant :

une électrode positive comportant un oxyde de métal de transition-lithium surlithié ayant une structure en couches ;
une électrode négative comportant un matériau actif négatif à base de silicium ; et
un électrolyte, qui est interposé entre l'électrode positive et l'électrode négative, où l'électrolyte comprend un sel de lithium, une solution électrolytique non aqueuse et un additif pour former une interface d'électrolyte solide (SEI) stabilisée sur la surface d'une électrode de la batterie au lithium, l'additif étant le tris(triméthylsilyl)phosphate (TMSPa),
où la solution électrolytique non aqueuse comprend un éther à base de fluorure en une quantité d'au moins 3% en volume par rapport au volume total de la solution électrolytique non aqueuse.

2. Batterie au lithium de la revendication 1, dans laquelle l'éther à base de fluorure dans la solution électrolytique non aqueuse est présent en une quantité d'au moins 10% en volume par rapport au volume total de la solution électrolytique non aqueuse.

3. Batterie au lithium de la revendication 1 ou 2, dans laquelle la quantité de l'éther à base de fluorure dans la solution électrolytique non aqueuse se trouve dans la plage allant de 10 à 70% en volume par rapport au volume total de la solution électrolytique non aqueuse.

4. Batterie au lithium de la revendication 1, 2 ou 3, dans laquelle l'éther à base de fluorure comprend au moins un composé représenté par la Formule 4, la Formule 5 ou la Formule 6 ; avec

$$Rf1\text{-}O\text{-}Rf2 \qquad \text{[Formule 4]}$$

où Rf1 et Rf2 représentent chacun indépendamment un groupe fluoralkyle en $C_1$ à $C_{12}$ linéaire ou ramifié ayant au moins un atome d'hydrogène substitué par un groupe fluoro ;

$$Rf1\text{-}O\text{-}R \qquad \text{[Formule 5]}$$

où Rf1 représente un groupe fluoralkyle en $C_1$ à $C_{12}$ linéaire ou ramifié ayant au moins un atome d'hydrogène substitué par un groupe fluoro, et R représente un groupe alkyle en $C_1$ à $C_{12}$ linéaire ou ramifié ;

$$Rf1\text{-}O\text{-}(R'\text{-}O)_n\text{-}Rf2 \qquad \text{[Formule 6]}$$

où Rf1 et Rf2 représentent chacun indépendamment un groupe fluoralkyle en $C_1$ à $C_{12}$ linéaire ou ramifié ayant au moins un atome d'hydrogène substitué par un groupe fluoro, et R' représente un groupe alkylène en $C_1$ à $C_5$ linéaire ou ramifié, et n représente un nombre entier de 1 à 5.

5. Batterie au lithium de la revendication 4, dans laquelle Rf1 ou Rf2 représente un groupe fluoralkyle choisi entre $HCF_2$-, $CF_3$-, $HCF_2CF_2$-, $CH_3CF_2$-, $CF_3CH_2$-, $CF_3CF_2$-, $(CF_3)_2CH$-, $HCF_2CF_2CH_2$-, $CF_3CH_2CH_2$-, $HCF_2CF_2CF_2CH_2$-, $HCF_2CF_2CF_2CF_2CH_2$-, $CF_3CF_2CH_2$-, $CF_3CFHCF_2CH_2$-, $HCF_2CF(CF_3)CH_2$-, ou $CF_3CF_2CH_2CH_2$-.

6. Batterie au lithium de la revendication 4 ou 5, dans laquelle R représente un groupe alkyle choisi entre $-CH_3$, $-C_2H_5$, $-C_3H_7$ ou $-CH(CH_3)CH_3$.

7. Batterie au lithium de la revendication 4, 5 ou 6, dans laquelle R' représente un groupe alkylène choisi entre $-CH_2$-, $-CH_2CH_2$- ou $-CH_2CH_2CH_2$-.

8. Batterie au lithium selon l'une des revendications précédentes, dans laquelle la solution électrolytique non aqueuse comprend en outre un composé à base de carbonate, un composé à base d'ester, un composé à base d'éther, un composé à base de cétone, un composé à base d'alcool, un solvant aprotique ou une combinaison de ceux-ci.

9. Batterie au lithium selon l'une des revendications précédentes, dans laquelle la solution électrolytique non aqueuse comprend ou est constituée de :

   10 à 70% en volume d'éther à base de fluorure ;
   10 à 30% en volume de composé de fluorocarbonate ; et
   0 à 80% en volume de composé de carbonate en chaîne.

10. Batterie au lithium de la revendication 9, dans laquelle
    l'éther à base de fluorure est choisi entre $HCF_2CF_2CH_2OCF_2CF_2H$, $HCF_2CF_2CH_2OCF_2CH_3$, $CF_3CF_2CH_2OCF_2CF_2H$, $CF_3CF_2CH_2OCF_2H$, $HCF_2CF_2OCH_2CF_3$, $HCF_2CF_2CH_2OCF_2CFHCF_3$, $CF_3CF_2CH_2OCF_2CFHCF_3$, $HCF_2CF_2CH_2OCH_2CFHCF_3$, $CF_3CF_2CH_2OCH_2CFHCF_3$ et $HCF_2CF_2CH_2OCH_3$ ;
    le composé de fluorocarbonate est choisi entre le carbonate de fluoréthylène (FEC), le 4,5-difluor-éthylènecarbonate, le 4,4-difluoréthylènecarbonate, le 4,4,5-trifluoréthylènecarbonate, le 4,4,5,5-tétrafluor-éthylènecarbonate, le 4-fluoro-5-méthyléthylènecarbonate, le 4-fluoro-4-méthyléthylènecarbonate, le 4,5-difluoro-4-méthyléthylènecarbonate, le 4,4,5-trifluoro-5-méthyl-éthylènecarbonate, le trifluorométhyléthylènecarbonate ; et
    le composé de carbonate en chaîne est choisi entre le carbonate de diéthyle (DEC), le carbonate de diméthyle (DMC), le carbonate de dipropyle (DPC), le carbonate de méthylpropyle (MPC), le carbonate d'éthylpropyle (EPC), le carbonate de méthyléthyle (MEC).

11. Batterie au lithium selon la revendication 1, dans laquelle l'additif est présent en une quantité allant de 0,01 à 10% en poids par rapport au poids total de la solution électrolytique non aqueuse pour former un film SEI stable.

**12.** Batterie au lithium selon l'une des revendications précédentes, dans laquelle l'oxyde de métal de transition-lithium surlithié comporte un composé représenté par la Formule 1 ci-dessous :

$$xLi_2MO_3\text{-}(1\text{-}x)LiM'O_2 \qquad \text{[Formule 1]}$$

où $0<x<1$,
M représente au moins un métal choisi parmi les métaux de transition de Période 4 et les métaux de transition de Période 5, ayant un nombre d'oxydation moyen de +4, et
M' représente au moins un métal choisi parmi les métaux de transition de Période 4 et les métaux de transition de Période 5, ayant un nombre d'oxydation moyen de +3.

**13.** Batterie au lithium selon l'une des revendications précédentes, dans laquelle l'oxyde de métal de transition-lithium surlithié comporte au moins un composé représenté par les Formules 2 à 5 ci-dessous :

$$<\text{Formule 2}> \qquad xLi_2MnO_3\text{-} (1\text{-}x) LiNi_aCo_bMn_cO_2,$$

où $0<x<1$, $0<a<1$, $0<b<1$, $0<c<1$, et $a+b+c = 1$ ;

$$<\text{Formule 3}> \qquad xLi_2MO_3\text{-}yLiM'O_2\text{-}zLi_{1+d}M''_{2\text{-}d}O_4,$$

où $x+y+z = 1$, $0<x<1$, $0<y<1$, $0<z<1$ et $0\leq d\leq 0,33$, M représente au moins un métal choisi parmi les métaux de transition de Période 4 et les métaux de transition de Période 5 ayant un nombre d'oxydation moyen de +4, M' représente au moins un métal choisi parmi les métaux de transition de Période 4 et les métaux de transition de Période 5 ayant un nombre d'oxydation moyen de +3, et M" représente au moins un métal choisi parmi les métaux de transition de Période 4 et les métaux de transition de Période 5 ayant un nombre d'oxydation moyen combiné de +3 ou +4 ;

$$<\text{Formule 4}> \qquad Li [Li_xMe_y]O_{2+d},$$

où $x+y = 1$, $0<x<1$, $0\leq d\leq 0,1$ et Me représente au moins un métal choisi dans le groupe consistant en Mn, V, Cr, Fe, Co, Ni, Zr, Re, Al, B, Ge, Ru, Sn, Ti, Nb, Mo et Pt ; et

$$<\text{Formule 5}> \qquad Li [Li_xNi_aCo_bMn_c]O_{2+d},$$

où $x+a+b+c = 1$, $0<x<1$, $0<a<1$, $0<b<1$, $0<c<1$ et $0\leq d\leq 0,1$.

**14.** Batterie au lithium selon l'une des revendications précédentes, dans laquelle le matériau actif négatif à base de silicium comporte un matériau choisi dans le groupe consistant en Si, $SiO_x$ $(0<x<2)$, un alliage Si-Z, où Z représente un métal alcalin, un métal alcalino-terreux, un élément du Groupe 11, un élément du Groupe 12, un élément du Groupe 13, un élément du Groupe 14, un élément du Groupe 15, un élément du Groupe 16, un métal de transition, un élément de terre rare ou une combinaison de ceux-ci, et ne représente pas Si, et une combinaison de ceux-ci.

# FIG. 1

# FIG. 2

—··— EXAMPLE 5

— — — EXAMPLE 4

············· EXAMPLE 3

------ EXAMPLE 2

—·— EXAMPLE 1

—···— COMPARATIVE EXAMPLE 1

CYCLE PERFORMANCE

# FIG. 3

-------- EXAMPLE 3

—·— EXAMPLE 7

—··— COMPARATIVE EXAMPLE 1

CYCLE PERFORMANCE

CYCLE

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007030297 A
- EP 0807986 A
- JP 7249432 A
- JP 8037024 A
- EP 2495797 A
- US 2010124708 A
- EP 1039570 A

- US 2004038133 A
- US 2009325076 A
- EP 2312684 A
- US 2011151336 A
- US 2006051673 A
- US 6652605 A

**Non-patent literature cited in the description**

- *J. Fluorine Chem.,* 2001, vol. 111, 167